# EUROPEAN PATENT APPLICATION

(11) **EP 2 607 073 A2**
(43) Date of publication of application: **26.06.2013**
(21) Application number: 11818305.2
(22) Date of filing: 13.07.2011
(51) Int. Cl.: B32B 17/00, B32B 15/08, B32B 38/00, F16L 59/06

(54) **COMPOSITE CORE MATERIAL FOR VACUUM INSULATION PANEL, PREPARATION METHOD THEREOF, AND VACUUM INSULATION PANEL USING SAME**

(30) Priority: 17.08.2010 KR 20100079154
(71) Applicant: LG Hausys, Ltd., Seoul 150-721 (KR)
(72) Inventor: HAN, Jung-Pil, Ulsan 680-010 (KR); HWANG, Sung-Seock, Cheongju-si Chungcheongbuk-do 361-370 (KR)
(74) Representative: Zacco Denmark A/S
(86) International application number: PCT/KR2011/005145
(87) International publication number: WO 2012/023705

(57) **Abstract**

The present invention relates to a composite core material for a vacuum insulation panel which exhibits excellent initial insulation and long-term durability, a method of manufacturing the same, and a vacuum insulation panel using the same. The vacuum insulation panel includes a composite core material formed of glass fiber wool and a glass fiber board, and an outer skin material having a layered structure comprising a surface protective layer, a metal barrier layer, and a bonding layer from the outside to vacuum-package the core material.

## Description

### [Technical Field]

The present invention relates to a vacuum insulation panel, and more particularly, to a vacuum insulation panel which includes a core material formed of at least two composite materials of glass fiber wool and a glass fiber board, thereby exhibiting excellent initial insulation and long-term durability.

### [Background Art]

A vacuum insulation panel is generally manufactured by receiving a continuous rigid cellular plastic foaming agent or an inorganic material as a core material in an encapsulant formed of a composite plastic laminate film exhibiting excellent gas barrier properties, reducing an inner pressure of the encapsulant, and heat-sealing stacked portions of gas barrier films along the circumference of the encapsulant.

An inorganic compound having low thermal conductivity and generating a small amount of gas is suitable for the core material of the vacuum insulation panel. In particular, a vacuum insulation panel having a glass fiber stacked body as a core material is known to exhibit excellent insulation.

In an existing vacuum insulation panel, glass fiber wool or glass fiber board is used alone as a core material. Glass fiber wool is manufactured through thermal compression by collecting bulky fiber glass, making it possible to secure a thermal conductivity of 0.0025 Kcal/mhr°C or less in manufacture of the vacuum insulation panel.

However, when glass fiber wool is used as a core material of a vacuum insulation panel, excellent initial thermal performance can be secured, but thermal conductivity increases due to gas passing through an outer skin film over time, thereby causing deterioration in long-term durability.

Meanwhile, when glass fiber board is used as a core material for a vacuum insulation panel, heat transfer of gas is minimized due to small pore diameters of the glass fiber board upon transmission of gas even when the glass fiber board is used for a long period of time, thereby improving long-term durability. However, the glass fiber board has an initial thermal conductivity of 0.0035 Kcal/mhr°C or less, which is higher than that of the glass fiber wool.

As a result, when glass fiber wool is used as a core material for an existing vacuum insulation panel, long-term durability and lifespan of the vacuum insulation panel are reduced, causing a reliability problem when the vacuum insulation panel is applied to the field of home appliances as well as construction requiring a lifespan of 10 years or more.

In addition, when glass fiber board is used as a core material, initial insulation is lowered, resulting in a limit in application as an insulation panel.

### [Disclosure]

### [Technical Problem]

An aspect of the present invention is to provide a composite core material for a vacuum insulation panel formed of a composite material comprising glass fiber wool and a glass fiber board, which exhibits excellent initial insulation and long-term durability.

Another aspect of the present invention is to provide a method of manufacturing a vacuum insulation panel including a core material formed of a composite material composed of glass fiber wool and a glass fiber board, which is prepared by a process selected from among stacking, thermal compression, inorganic binder bonding, and needling.

A further aspect of the present invention is to provide a vacuum insulation panel which can optimize all of the aforementioned factors to exhibit a long-term durability of 10 years or more.

### [Technical Solution]

In accordance with one aspect of the present invention, a composite core material for a vacuum insulation panel has a composite laminate structure, in which glass fiber wool including glass fibers having an average diameter of 4 µm to 6 µm and a glass fiber board including glass fibers having an average diameter of 1 µm to 4 µm are compounded, and includes at least one of fumed silica powder, silica powder, perlite powder, and aerogel powder.

In accordance with another aspect of the present invention, there is provided a method of manufacturing a composite core material for a vacuum insulation panel, which is formed of a composite material comprising glass fiber wool and a glass fiber board, in which the composite material of the glass fiber wool and the glass fiber board is formed through a process selected from stacking, thermal compression, inorganic binder bonding, and needling.

In accordance with a further aspect of the present invention, a vacuum insulation panel includes a core material formed of a composite material comprising glass fiber wool and a glass fiber board, and an outer skin material for vacuum-packaging the core material.

### [Advantageous Effects]

The vacuum insulation panel according to the present invention employs both glass fiber wool exhibiting excellent initial insulation and a glass fiber board exhibiting excellent long-term durability, thereby exhibiting both excellent initial insulation and excellent long-term durability.

In addition, the vacuum insulation panel according to the present invention may exhibit excellent long-term durability of at least 10 years according to the aforementioned core material and other characteristics of materials.

### [Description of Drawings]

Figs. 1 to 4 are sectional views of core materials for a vacuum insulation panels according to embodiments of the present invention.
Fig. 5 is a sectional view of a getter disposed in a vacuum insulation panel according to one embodiment of the present invention.
Figs. 6 and 7 are sectional views of an outer skin material of the vacuum insulation panel according to the embodiment of the present invention.
Figs. 8 and 9 are sectional views of vacuum insulation panels according to embodiments of the present invention.
Fig. 10 is a graph depicting insulation properties of vacuum insulation panels of inventive examples and comparative examples.

### [Best Mode]

The above and other aspects, features, and advantages of the invention will become apparent from the detailed description of the following embodiments in conjunction with the accompanying drawings. It should be understood that the present invention is not limited to the following embodiments and may be embodied in different ways, and that the embodiments are provided for complete disclosure and a thorough understanding of the invention to those skilled in the art. The scope of the invention is defined only by the claims. Like components will be denoted by like reference numerals throughout the specification.

Now, a composite core material for a vacuum insulation panel, a method of manufacturing the same, and a vacuum insulation panel using the same according to exemplary embodiments of the present invention will be described in detail with reference to the accompanying drawings.

First, a core material and a method of manufacturing the same according to embodiments of the present invention will be described below.

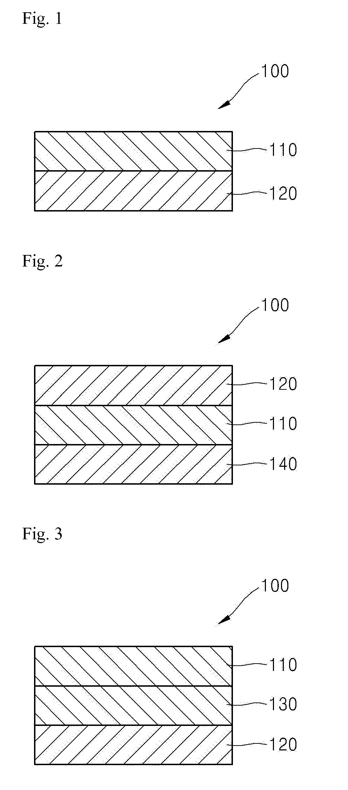

Figs. 1 to 4 are sectional views of core materials for vacuum insulation panels according to embodiments of the present invention.

Referring to Fig. 1, glass fiber wool 120 having a shape substantially corresponding to a desired shape of a core material 100 to be formed is prepared.

The core material 100 formed of a composite material comprised of the glass fiber wool 120 and a glass fiber board 110 is used as a core material for a vacuum insulation panel. The composite material may be formed such that the glass fiber board 110 is stacked on one or both sides of the glass fiber wool 120.

Figs. 2 to 4 are sectional views of core materials for vacuum insulation panels according to other embodiments of the present invention.

A single layer of glass fiber wool and a single layer of glass fiber board may be stacked or a plurality of layers of glass fiber wool and a plurality of layers of glass fiber board may be stacked if necessary when compounded. Several embodiments in which a plurality of layers is stacked are shown in Figs. 2 to 4.

Fig. 2 shows a core material in which glass fiber board 110 and glass fiber wool 120 are sequentially stacked on glass fiber wool 140.

Fig. 3 is a core material in which two layers 130, 110 of glass fiber board are sequentially stacked on glass fiber wool 120.

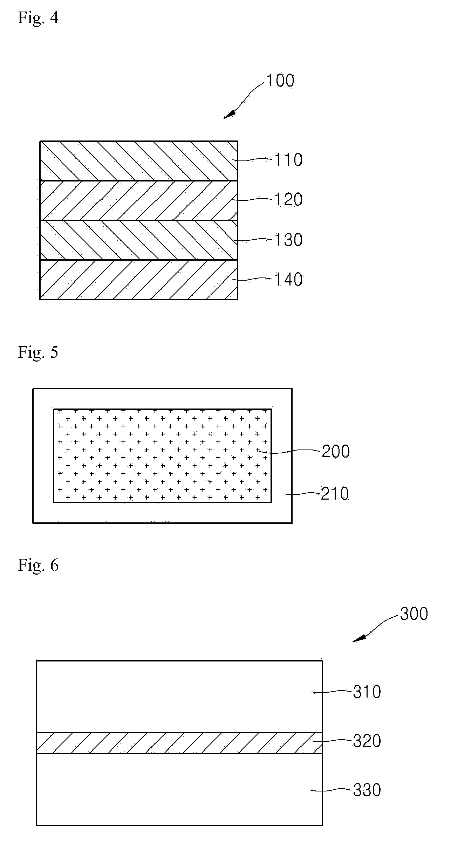

Fig. 4 is a core material in which glass fiber board 130, glass fiber wool 120, and a glass fiber board 110 are sequentially stacked on glass fiber wool 140.

In addition to the core materials shown in Figs. 1 to 4, several forms may be used by changing a stacking order and the number of layers.

The glass fiber wool 120 is formed by collecting glass fibers, and may be manufactured through thermal compression. The thermal compression may include a process of compressing and heating glass fibers for 10 minutes.

Glass fibers of the glass fiber wool 120 may have an average diameter of 4 µm to 6 µm If the average diameter of glass fibers is less than 4 µm, the glass fiber wool 120 formed by collecting fibers has small porosity, thereby deteriorating initial insulation when used as a core material of a vacuum insulation panel, whereas if the average diameter of glass fibers exceeds 6 µm, the glass fiber wool 120 has excessive porosity, thereby lowering long-term durability.

The glass fiber wool 120 may include 55% to 70% of silicon oxide, 0.5% to 5.0% of aluminum oxide, 2.5% to 4.0% of magnesium oxide, 4.5% to 12% of calcium oxide, 0.1% to 0.5% of potassium oxide, and the like. In addition, glass fiber wool having other configurations may also be used.

The glass fiber wool 120 may be used by cutting a glass cotton fabric into a desired form such as a rectangular or circular shape according to the shape of the vacuum insulation panel.

Next, a glass fiber board 110 having a shape substantially corresponding to the shape of the core material 100 is prepared.

Glass fibers having an average fiber diameter of 1 µm to 4 µm may be used for the glass fiber board 110. If the average diameter of glass fibers is less than 1 µm, the glass fiber board 110 formed through a wet process has so small a porosity that insulation thereof is lowered, making it unsuitable for the glass fiber board 110 to be used as the core material of the vacuum insulation panel, whereas if the average diameter of glass fibers exceeds 4 µm, the glass fiber board 110 has so large a porosity that an effect of the glass fiber board to improve long-term durability becomes weak.

The glass fiber board may be manufactured through a wet process in which glass fibers are dispersed in an inorganic binder (at least one of soluble sodium silicate, alumina sol, silica sol, and alumina phosphate) and manufactured as a board. In particular, the soluble sodium silicate includes water, silica powder, and sodium hydroxide.

The glass fiber board 110 may include 55% to 70% of silicon oxide, 0.5% to 5.0% of aluminum oxide, 2.5% to 4.0% of magnesium oxide, 4.5% to 12% of calcium oxide, 0.1% to 0.5% of potassium oxide, and the like. In addition, glass fiber wool having other configurations may also be used.

The glass fiber board 110 includes a material capable of ensuring excellent long-term durability, and may be used in the form of a glass fiber board, sheet or paper product. In addition, the material capable of ensuring excellent long-term durability may include at least one selected from among fumed silica powder, silica powder, perlite powder, and aerogel.

A method of manufacturing a core material 100 for a vacuum insulation panel according to one embodiment of the present invention includes: forming the core material 100 of a composite material comprising the glass fiber wool 120 and the glass fiber board 110. Here, the composite material may be formed through at least one of stacking, thermal compression, inorganic binder bonding, and needling.

Among these methods for forming the composite material, stacking refers to a process of stacking at least two materials.

Thermal compression is a process of thermally compressing the materials at high temperature, and may be performed using a plate press or a belt press. Thermal compression may be performed at a temperature of 400°C to 1000°C. If the thermal compression is performed at a temperature of less than 400°C, glass fiber textures forming the wool and the board may not be properly deformed, thereby causing undesirable compression, whereas if the thermal compression is performed at a temperature of more than 1000°C, manufacturing costs become excessive.

Inorganic binder bonding is a process of bonding the glass fiber wool 120 and the glass fiber board 110 using an inorganic binder. Examples of the inorganic binders may include alumina sol, silica sol, alumina phosphate, and soluble sodium silicate, which may be used alone or in combination of two or more thereof.

Needling is a process of stacking glass fiber wool and a glass fiber board, followed by needling the stacked glass fiber wool and a glass fiber board using a needle.

The vacuum insulation panel according to the present invention includes a core material formed of a composite material comprising glass fiber wool and a glass fiber board, and an outer skin material for vacuum-packaging the core material, and may further include a getter attached to or inserted into the core material.

Fig. 5 is a sectional view of a getter provided to the vacuum insulation panel according to the embodiment of the present invention;

Gas and moisture can be generated inside the outer skin material due to change in external temperature, and the getter is used to prevent generation of gas and moisture. Now, the getter according to the present invention will be described.

Referring to Fig. 5, quicklime (CaO) 200 is included in a pouch 210. In the present invention, the getter is formed by packaging quicklime powder having a purity of 95% or more in the pouch 210, and the pouch 210 is formed of crepe paper and polypropylene (PP)-impregnated nonwoven fabrics such that the getter may have a moisture absorption rate of 25% or more. Here, the getter may have a thickness of 2 mm or less in consideration of the overall thickness of the insulation pad.

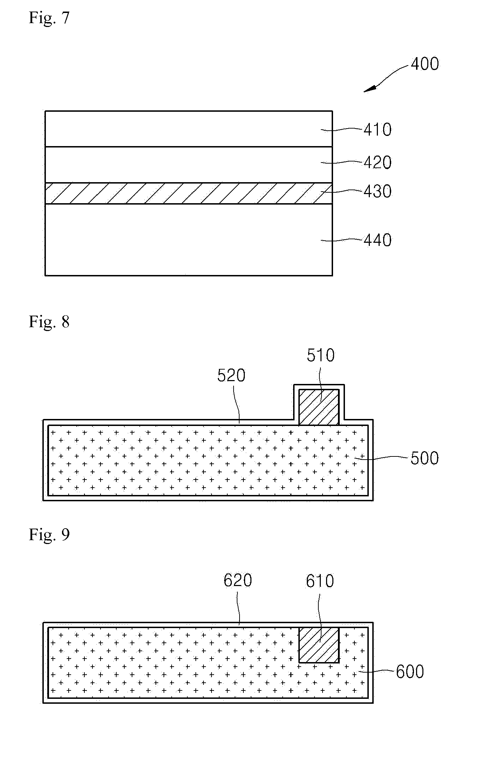

Figs. 6 and 7 are sectional views of outer skin materials provided to the vacuum insulation panel according to the embodiment of the present invention.

An outer skin material 300 or 400 serves as an encapsulant surrounding the core material of the vacuum insulation panel of the present invention. Now, a detailed shape and manufacturing method thereof will be described.

In the outer skin material 300 or 400, a metal barrier layer 320 or 430 and a surface protective layer 310 are sequentially stacked on a bonding layer 330 or 440. Then, the bonding layer 330 or 430 may be defined as a layer formed in the encapsulant, and the surface protective layer 310 may be defined as a layer exposed on the outermost side.

The bonding layer 330 or 440 is a layer thermally fused through heat sealing, and serves to maintain a vacuum state. Thus, the bonding layer 330 or 440 may be formed of a thermoplastic plastic film comprised of at least one material selected from among high-density polyethylene (HDPE), low-density polyethylene (LDPE), linear low-density polyethylene (LLDPE), cast polypropylene (CPP), oriented polypropylene (OPP), polyvinylidene chloride (PVDC), polyvinyl chloride (PVC), ethylene vinyl acetate (EVA) copolymers, and ethylene vinyl alcohol (EVOH) copolymers, and may have a thickness of 1 µm to 100 µm to provide sufficient sealing.

Next, a metal thin film having a thickness of 6 µm to 7 µm is formed on the bonding layer 330 or 440 as a barrier layer 320 or 430 for blocking gas and protecting the core material. Then, since an aluminum foil metal barrier layer 320 or 430 is generally used and a thin film having superior properties to the aluminum foil has not been clearly developed yet, the present invention employs an aluminum foil. Aluminum is a metal and may crack when folded, and the surface protective layer 310 is formed on the metal barrier layer 320 or 430 to prevent cracking.

The surface protective layer of the outer skin material according to the present invention may have a layered structure of a polyethylene terephtalate (PET) film 410 having a thickness of 10 µm to 14 µm and a nylon film 420 having a thickness of 20 µm to 30 µm.

In this case, when serious cracking occurs in the metal barrier layer 430, the polyethylene terephthalate and nylon films 410, 420 can be damaged. In the present invention, a vinyl resin layer is coated on the polyethylene terephthalate layer to prevent film damage.

The vinyl resin layer may be formed of at least one vinyl resin selected from among polyvinyl chloride (PVC), polyvinyl acetate (PVA), polyvinyl alcohol (PVAL), polyvinyl butyral (PVB), and polyvinylidene chloride (PVDC) resins.

In addition, in order to improve a sealing property of the outer skin material, the surface protective layer 310, the metal barrier layer 320 or 430, and the bonding layer 330 or 440 may be bonded to each other by a polyurethane (PU) resin.

By forming the outer skin material 300 or 400 in this way, the vacuum insulation panel according to the present invention may exhibit optimal sealing properties and long-term durability.

Figs. 8 and 9 are sectional views of vacuum insulation panels according to other embodiments of the present invention.

Fig. 8 shows a vacuum insulation panel sealed using an outer skin material 520 with a getter 510 attached to a surface of a core material 500, and Fig. 9 shows a vacuum insulation panel in which an outer skin material 620 is sealed and a getter 610 is inserted into a core material 600.

Both the vacuum insulation panels manufactured in this way exhibit excellent insulation and long-term durability, and detailed examples will be described hereinafter.

### Examples

Now, the present invention will be described in more detail with reference to some examples of the present invention. Here, the following examples are provided for illustration only and are not to be construed in any way as limiting the present invention.

### [Manufacture of vacuum insulation panel]

### Example 1

First, a core material formed of a composite material including a single layer of glass fiber wool and a single layer of glass fiber board as shown in Fig. 1 was manufactured to a size of 8 mm x 190 mm x 250 mm (thicknessxwidthx length), and was applied to a vacuum insulation panel.

Next, an outer skin material having a laminate structure of a 12 µm thick polyvinylidene chloride (PVDC)/polyethylene terephthalate (PET) film, a 25 µm thick nylon film, a 7 µm thick aluminum foil, and a 50 µm thick linear low-density polyethylene (LLDPE) film was formed.

Then, two getters manufactured by placing 25g of quicklime (CaO) having a purity of 95% in a pouch were inserted into the core material as shown in Fig. 9.

Next, the core material was sealed at a vacuum degree of 10 Pa after insertion into an encapsulant to manufacture the vacuum insulation panel according to the present invention.

### Example 2

The vacuum insulation panel was manufactured in the same manner as in Example 1, except that the core material was formed of a composite material in which a single layer of glass fiber board was stacked on two layers of glass fiber wool, and was manufactured to a size of 8 mm x 190 mm x 250 mm (thicknessxwidthx length).

### Comparison Example 1

The vacuum insulation panel was manufactured in the same manner as in Example 1, except that the core material was formed only of glass fiber board and was manufactured to a size of 8 mm x 190 mm x 250 mm (thicknessxwidthx length).

### Comparison Example 2

The vacuum insulation panel was manufactured in the same manner as in Example 1, except that the core material was formed by stacking two layers of glass fiber board and was manufactured to a size of 8 mm x 190 mm x 250 mm (thicknessxwidthx length).

### Comparison Example 3

The vacuum insulation panel was manufactured in the same manner as in Example 1, except that the core material was formed only of glass fiber wool and was manufactured to a size of 8 mm x 190 mm x 250 mm (thicknessxwidthx length).

### Comparison Example 4

The vacuum insulation panel was manufactured in the same manner as in Example 1, except that the core material was formed by stacking two layers of glass fiber wool and was manufactured to a size of 8 mm x 190 mm x 250 mm (thicknessxwidthx length).

### [Performance Test and Evaluation]

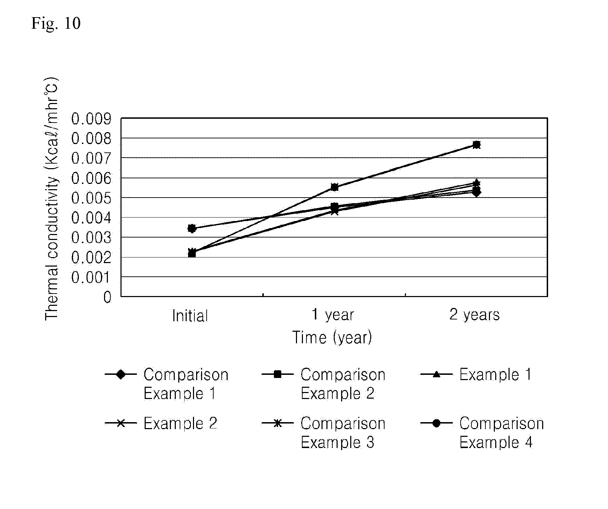

Each of the vacuum insulation panels according to Examples 1 and 2 and Comparison Examples 1 to 4 was placed in a constant-temperature chamber and maintained at 85°C for three months to be compared with vacuum insulation panels which have not been entirely heated. Then, thermal conductivity of each of the vacuum insulation films was measured using a thermal conductivity tester HC-074-200 (EKO Co., Ltd.). Next, conductivity after 0 to 10 years was predicted by applying acceleration factors, and results are shown in Fig. 10.

Fig. 10 is a graph depicting insulation properties of vacuum insulation panels of inventive examples and comparative examples.

Referring to Fig. 10, in Examples 1 and 2, it could be seen that the vacuum insulation panels including a composite core material exhibited excellent initial insulation and long-term durability since initial thermal conductivity thereof was low and thermal conductivity thereof increased relatively slowly over time.

It could also be seen that the vacuum insulation panels prepared in Comparison Examples 1 and 2 exhibited excellent long-term durability due to thermal conductivity increasing slowly over time, but exhibited undesired initial insulation due to high initial thermal conductivity. It could also be seen that the vacuum insulation panels prepared in Comparison Examples 3 and 4 exhibited excellent initial thermal performance due to the same levels of initial thermal conductivity as those of Examples 1 and 2, but had poor long-term durability due to thermal conductivity increasing over time.

As such, the vacuum insulation panels according to the present invention can maximize initial insulation while increasing long-term durability to 10 years or more.

Although some embodiments have been described herein, it will be understood by those skilled in the art that these embodiments are provided for illustrative purposes only, and various modifications, changes, alterations and equivalent embodiments can be made without departing from the scope of the present invention. Therefore, the scope and sprit of the present invention should be defined only by the accompanying claims and equivalents thereof.

## Claims

1. A core material for a vacuum insulation panel formed of a composite material comprising glass fiber wool and a glass fiber board.

2. The core material according to claim 1, wherein the glass fiber board is formed on one or both sides of the glass fiber wool.

3. The core material according to claim 1, wherein the core material is formed by stacking at least one layer of the glass fiber wool and at least one layer of the glass fiber board.

4. The core material according to claim 1, wherein glass fibers in the glass fiber wool have an average diameter of 4 µm to 6 µm

5. The core material according to claim 1, wherein glass fibers in the glass fiber board have an average diameter of 1 µm to 4 µm

6. The core material according to claim 1, wherein the glass fiber board comprises at least one of fumed silica powder, silica powder, perlite powder, and aerogel powder.

7. A method of manufacturing a core material for a vacuum insulation panel, wherein the core material is formed of a composite material comprising glass fiber wool and a glass fiber board.

8. The method according to claim 1, wherein the composite material of the glass fiber wool and the glass fiber board is formed through at least one of stacking, thermal compression, inorganic binder bonding, and needling.

9. The method according to claim 8, wherein the thermal compression is performed at a temperature of 400°C or more.

10. The method according to claim 8, wherein the thermal compression is performed using a plate press or a belt press.

11. The method according to claim 8, wherein an inorganic binder used in the inorganic binder bonding comprises at least one of alumina sol, silica sol, alumina phosphate, and soluble sodium silicate.

12. A vacuum insulation panel comprising:
a core material formed of a composite material comprising glass fiber wool and a glass fiber board; and
an outer skin material for vacuum-packaging the core material.

13. The vacuum insulation panel according to claim 12, further comprising: a getter attached to or inserted into the core material.

14. The vacuum insulation panel according to claim 13, wherein the getter is formed by packaging quicklime (CaO) powder having a purity of 95% or more in a pouch.

15. The vacuum insulation panel according to claim 14, wherein the pouch is formed of crepe paper and polypropylene (PP) impregnated nonwoven fabrics.

16. The vacuum insulation panel according to claim 13, wherein the getter has a moisture absorption rate of 25% or more.

17. The vacuum insulation panel according to claim 12, wherein the outer skin material has a layered structure comprising a surface protective layer, a metal barrier layer, and a bonding layer from an outside.

18. The vacuum insulation panel according to claim 17, wherein the surface protective layer has a layered structure of polyethylene terephthalate (PET) and nylon films.

19. The vacuum insulation panel according to claim 18, wherein a vinyl resin is coated on the polyethylene terephthalate (PET) film.

20. The vacuum insulation panel according to claim 19, wherein the vinyl resin is at least one selected from among polyvinyl chloride (PVC), polyvinyl acetate (PVA), polyvinyl alcohol (PVAL), polyvinyl butyral (PVB), and polyvinylidene chloride (PVDC) resins.

21. The vacuum insulation panel according to claim 17, wherein the metal barrier layer is an aluminum foil.

22. The vacuum insulation panel according to claim 17, wherein the bonding layer is formed of at least one selected from among high-density polyethylene (HDPE), low-density polyethylene (LDPE), linear low-density polyethylene (LLDPE), cast polypropylene (CPP), oriented polypropylene (OPP), polyvinylidene chloride (PVDC), polyvinyl chloride (PVC), ethylene vinyl acetate (EVA) copolymers, and ethylene vinyl alcohol (EVOH) copolymers.

23. The vacuum insulation panel according to claim 17, wherein the surface protective layer and the metal barrier layer, and the metal barrier layer and the bonding layer are bonded to each other by a polyurethane (PU) resin.
